# EUROPÄISCHE PATENTANMELDUNG

(11) **EP 4 624 670 A1**
(43) Veröffentlichungstag der Anmeldung: **01.10.2025**
(21) Anmeldenummer: 24165897.0
(22) Anmeldetag: 25.03.2024
(51) Int. Cl.: E02F 3/32, E02F 9/08, E02F 9/20

(54) **ELEKTRISCHE BAUMASCHINE**

(71) Anmelder: Wacker Neuson Linz GmbH, 4063 Hörsching (AT)
(72) Erfinder: OBERNDORFER, Paul, 4650 Lambach (AT); FALZBERGER, Markus, 4070 Pupping (AT)
(74) Vertreter: Hübscher & Partner Patentanwälte GmbH

(57) **Zusammenfassung**

Es wird eine elektrische Baumaschine (1) mit einem elektrischen Fahrantrieb und/oder elektrischen Arbeitsaggregat, mit einem elektrischen Energiespeicher (2) zum Versorgen der Baumaschine (1) mit elektrischer Energie und mit einer Ladeeinrichtung (3) zum Laden des Energiespeichers (2) beschrieben, wobei die Ladeeinrichtung (3) oberhalb des elektrischen Energiespeichers (2) in einem Antriebsraum (4) angeordnet ist, der mit einer Abdeckhaube (5) verschließbar ist. Um vorteilhafte Wartungsverhältnisse zu schaffen, wird vorgeschlagen, dass im Antriebsraum (4) oberhalb des elektrischen Energiespeichers (2) eine Konsole (6) angeordnet ist, die eine Schubladenführung (7) für ein Gestell (8) der Ladeeinrichtung (3) aufweist, wobei das Gestell (8) gegebenenfalls Einschubführungen (9) für Ladeschnittstellenmodule (10) aufweist.

## Beschreibung

Die Erfindung bezieht sich auf eine Elektrische Baumaschine mit einem elektrischen Fahrantrieb und/oder elektrischen Arbeitsaggregat, mit einem elektrischen Energiespeicher zum Versorgen der Baumaschine mit elektrischer Energie und mit einer Ladeeinrichtung zum Laden des Energiespeichers, wobei die Ladeeinrichtung oberhalb des elektrischen Energiespeichers in einem Antriebsraum angeordnet ist, der mit einer Abdeckhaube verschließbar ist.

Elektrisch angetriebene Baumaschinen besitzen einen Akku als Energiespeicher, mit dem diverse Elektromotoren betrieben und Verbraucher versorgt werden. Zum Laden des Akkus ist eine Steckbuchse an der Maschine vorgesehen, an die ein Ladekabel angeschlossen werden kann. Je nach Kunde gibt es unterschiedliche Anforderungen hinsichtlich der gewünschten Ladeleistung, was den Einbau unterschiedlichster Ladeeinrichtungen erfordert. Gedrängte Platzverhältnisse in Antriebsräumen in Folge der großen Akkus führen zu starken Einschränkungen im freien Bauraum, wodurch die Zugänglichkeiten zu Komponenten im Reparatur oder Servicefall sowie die Montage erheblich erschwert werden. Ein nachträglicher Einbau von Ladeeinrichtungen mit höherer Ladeleistung ist damit mit erheblichen Hindernissen verbunden.

Für beengte Baustelleneinsätze entwickeln sich die Bestrebungen dahingehend, möglichst kompakte Baumaschinen zu entwickeln. Aus dem Stand der Technik (EP4306724A1) sind hierzu elektrische hecküberstandsfreie Baumaschinen, beispielsweise Zero Tail Bagger, bekannt. Damit der Oberwagen der Baumaschine ausreichend kompakt ausgebildet werden kann, sind die Rotationsachse des Elektromotors und die Längsachse der hydraulischen Pumpe parallel zu einer Hochachse, also stehend angeordnet. Auf diese Weise kann die Höhe des Oberwagens zugunsten einer kompakten Länge und Breite des Oberwagens ausgenutzt werden. Nachteilig daran ist allerdings, dass sich dadurch Einschränkungen hinsichtlich der freien Ausrichtung des Elektromotors sowie der hydraulischen Pumpe ergeben, was zu Sonderausführungen dieser Komponenten und aufwendigen Kontaktierungen und Verlegungen der Hydraulikleitungen führen kann.

Der Erfindung liegt somit die Aufgabe zugrunde, eine Vorrichtung eingangs geschilderter Art zu schaffen, die eine verbesserte Zugänglichkeiten zu im Antriebsraum verbauten Komponenten im Reparatur oder Servicefall, sowie eine einfache Nachrüstung von Komponenten erlaubt.

Die Erfindung löst die gestellte Aufgabe dadurch, dass im Antriebsraum oberhalb des elektrischen Energiespeichers eine Konsole angeordnet ist, die eine Schubladenführung für ein Gestell der Ladeeinrichtung aufweist, also trägt oder ausbildet. Das Gestell kann, vorzugsweise wenigstens zwei, Einschubführungen für Ladeschnittstellenmodule aufweisen.

Damit ist eine verbesserte Zugänglichkeit zu im Antriebsraum verbauten Komponenten im Reparatur- oder Servicefall gegeben, wenn das Gestell mit Ladeschnittstellenmodul(en) aus dem Arbeitsraum ausgeschoben wird, da sich bei ausgeschobenem Gestell ein freier Arbeitsraum auftut. Das ausgeschobene Gestell kann dabei in der ausgeschobenen Stellung gegebenenfalls nach oben aus dem Einschubbereich geschwenkt werden und damit die Einschuböffnung für einen freien Zugang freigeben. Auch eine Entnahme des ausgeschobenen Gestells ist nach einem Lösen elektrischer Verbindungen, insbesondere Stecker, möglich. Im Gestell verbaute Komponenten, wie Ladeschnittstellenmodule können problemlos getauscht bzw. nachgerüstet werden. Mit der Anzahl der im Gestell verbauten Ladeschnittstellenmodule kann die Ladeleistung eingestellt werden. Das Gestell kann eine Sicherungsbox und eine Ladebuchse aufnehmen. Die Ladeschnittstellenmodule können Ladegeräte und Ladesteuerungen aufweisen.

Überlappen sich die in Richtung einer Hochachse projizierten Projektionsflächen des Energiespeichers und des Gestells wenigstens abschnittsweise, vorzugsweise vollständig, so ist bei aus dem Antriebsraum ausgeschobenem Gestell ein bestmöglicher Zugang zu weiteren im Antriebsraum verbauten Komponenten im Reparatur- oder Servicefall möglich.

Die Ladeschnittstellenmodule können mit dem Gestell Erdungsverbunden sein. Dazu besteht die Möglichkeit im Gestell angeordnete Komponenten, wie insbesondere Ladeschnittstellenmodule, im Montagezustand mit dem Gestell zu verschrauben. Auch Erdungskabel, Schleifkontakte oder Steckverbindungen können zu diesem Zweck zwischen den Komponenten und dem Gestell vorgesehen sein, welches insbesondere einen geerdeten Käfig für darin angeordnete Komponenten bildet.

Gleichermaßen kann das Gestell mit der Konsole und damit mit einer Karosserie der Baumaschine erdungsverbunden sein. Um besonders robuste Verhältnisse und in Folge eines rauen Baustellenbetriebes auch eine gesicherte Arretierung des Gestells an der Konsole zu gewährleisten, kann das in den Antriebsraum eingeschobene Gestell mittels wenigstens einer, eine Erdungsverbindung bildenden Verschraubung mit der Konsole, und gegebenenfalls mit der Schubladenführung, gesichert verbunden sein. Nach einem Lösen der Verschraubung von Gestell und Konsole, beispielsweise zwei Schrauben im Bereich der Gestellvorderseite, kann das Gestell entlang der Schubladenführung aus dem Antriebsraum ausgezogen werden.

Vorzugsweise ist das Gestell zumindest teilweise zum Energiespeicher hin offen und sind in diesem offenen Bereich Kühlflächen der Ladeschnittstellenmodule angeordnet, die an einen zwischen Energiespeicher und Gestell vorgesehenen Kühlluftkanal anschließen. Damit kann die Abwärme von Energiespeicher und Ladeschnittstellenmodulen, die beispielsweise mit nach unten, gegen den Energiespeicher weisenden Kühlflächen ausgestattet sind, mittels einer gemeinsamen Lüftereinrichtung aus dem Antriebsraum transportiert werden.

Dem Gestell kann beispielsweise im Bereich der Gestellvorderseite ein Paneel zugeordnet sein, welches eine Ladeanschlussbuchse und eine Ladestandsanzeige aufnimmt. Überdeckt dieses Paneel das Gestell in einer Gebrauchslage rückseitig und ist das Paneel derart schwenkbar am Gestell gelagert, dass die Ladeschnittstellenmodule in einer von der Gebrauchslage abgeschwenkten Wartungslage frei zugänglich sind, so ergeben sich besonders kompakte Bauverhältnisse. Hinter dem Paneel kann ein Lagerraum zur Aufnahme eines Ladekabels vorgesehen sein. In das Paneel können Bedienelemente für den Ladeprozess der Maschine und Anzeigeelemente für den Ladezustand der Batterie integriert sein.

Neben den wenigstens zwei Einschubführungen für Ladeschnittstellenmodule kann das Gestell wenigstens eine Einschubführung für ein Sicherungsmodul und/oder einen Stromverteiler aufweisen.

Das Ladeschnittstellenmodul und gegebenenfalls ein Sicherungsmodul können über elektrische Steckverbindungen verfügen, die in eingeschobenem Zustand in entsprechend gegengleiche Steckverbindungen am Gestell eingesteckt sind.

Mit der Erfindung wird eine Kompakte Anordnung von im Gestell angeordneten, modular erweiterbaren elektrischen Bauteilen, wie eben Ladeschnittstellenmodulen, aber auch Sicherungsmodulen und/oder Stromverteiler und gegebenenfalls Bedienelementen für den Ladeprozess geschaffen. Das Gestell bildet eine kompakte Einheit welche durch ein Lösen einer oder weniger Sicherungen, wie Schrauben od. dgl. die Zugänglichkeit zu im Antriebsraum fest verbauten Komponenten stark verbessert, indem eine Schubladenführung für eine lineare Verschiebung einer gesamten, im Gestell angeordneten, Baugruppe ermöglicht. Damit wird auch ein Wechsel od. Tausch von Komponenten stark vereinfacht und können die im Gestell verbauten Komponenten in das Thermomanagement der Baumaschine integriert werden.

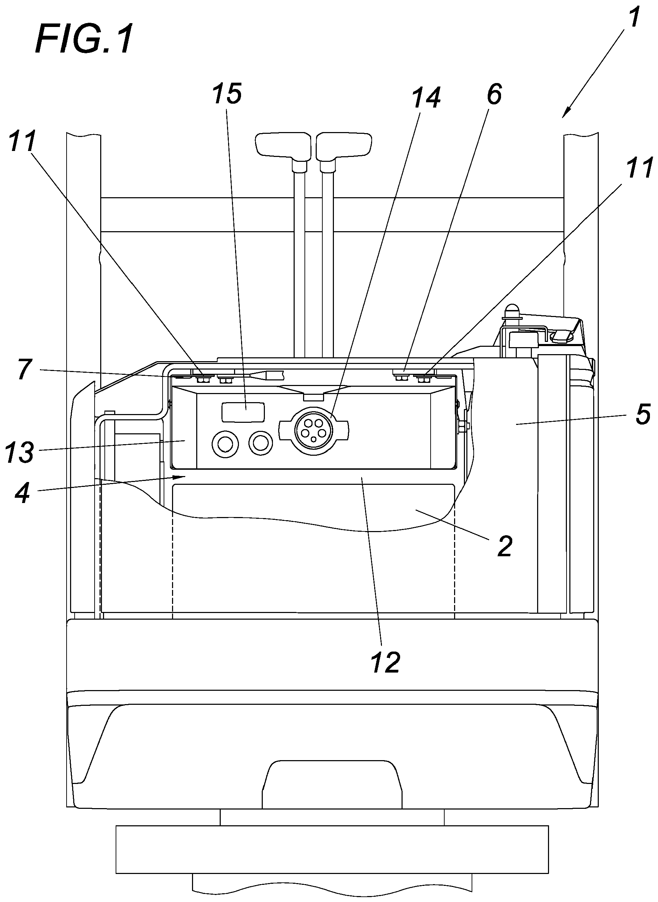

In der Zeichnung ist der Erfindungsgegenstand beispielsweise dargestellt. Es zeigen
Fig. 1 eine Teilgeschnittene Rückansicht auf eine elektrische Baumaschine,

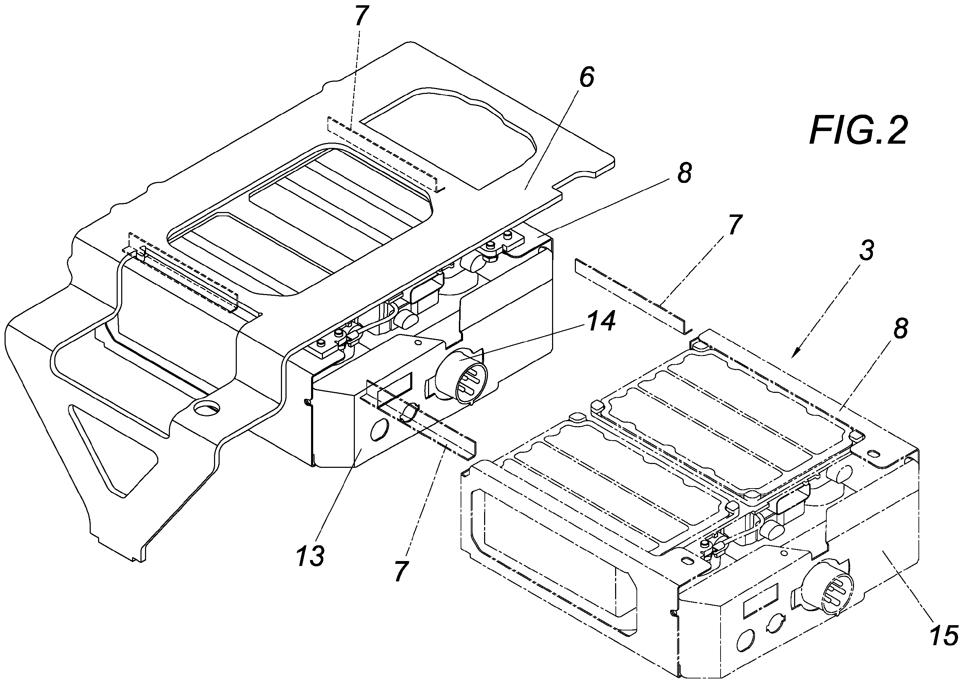

Fig. 2 eine Schrägansicht auf Konsole und Gestell und

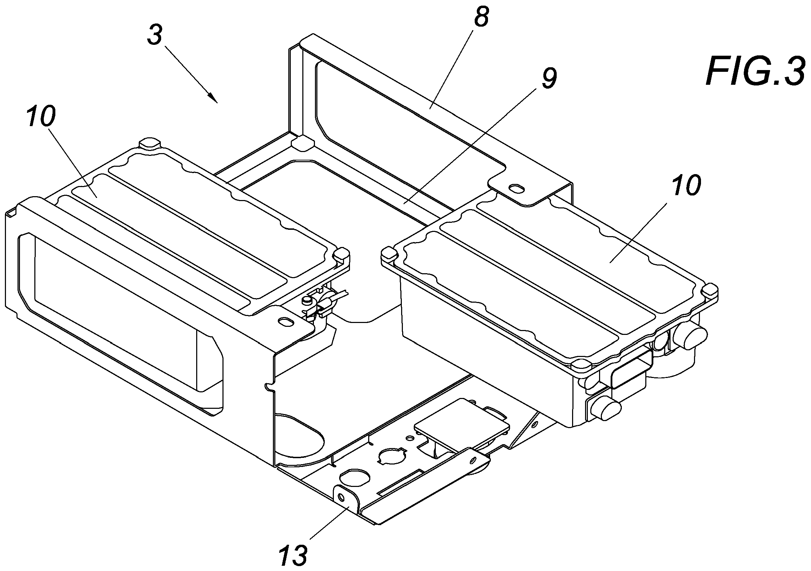

Fig. 3 eine Schrägansicht Gestell und Ladeschnittstellenmodul.

Die Elektrische Baumaschine 1 mit einem elektrischen Fahrantrieb und/oder elektrischen Arbeitsaggregat, umfasst einen elektrischen Energiespeicher 2 zum Versorgen der Baumaschine 1 mit elektrischer Energie und eine Ladeeinrichtung 3 zum Laden des Energiespeichers 2, wobei die Ladeeinrichtung 3 oberhalb des elektrischen Energiespeichers 2 in einem Antriebsraum 4 angeordnet ist, der mit einer Abdeckhaube 5 verschließbar ist. Im Antriebsraum 4 ist oberhalb des elektrischen Energiespeichers 2 eine Konsole 6 angeordnet, die eine Schubladenführung 7 für ein Gestell 8 der Ladeeinrichtung 3 aufweist, wobei das Gestell 8 Einschubführungen 9 für Ladeschnittstellenmodule 10 aufweist.

Die in Richtung einer Hochachse projizierten Projektionsflächen des Energiespeichers 2 und des Gestells 8 überlappen sich wenigstens abschnittsweise, im dargestellten Ausführungsbeispiel vollständig. Energiespeicher 2 und Gestell 8 könnten auch etwas seitlich zueinander versetzt sein.

Die Ladeschnittstellenmodule 10 sind mit dem Gestell 8 über Schrauben, Kabel, Schleifkontakte oder Steckverbindungen erdungsverbunden und mit geeigneten Mitteln im Gestell 8 fixiert. Das Gestell 8 ist wiederum mit der Konsole 6 und damit mit einer Karosserie der Baumaschine 1 erdungsverbunden. Im Ausführungsbeispiel ist das in die Konsole 6 bzw. in den Arbeitsraum 4 eingeschobene Gestell 8 mittels wenigstens einer, eine Erdungsverbindung bildenden Verschraubung 11 mit der Konsole 6 gesichert verbunden.

Das Gestell 8 ist zumindest teilweise zum Energiespeicher 2 hin nach unten offen. In diesem offenen Bereich sind Kühlflächen der Ladeschnittstellenmodule 10 angeordnet, die an einen zwischen Energiespeicher 2 und Gestell 8 vorgesehenen Kühlluftkanal 12 anschließen. Im Ausführungsbeispiel bildet wenigstens der Ladeschnittstellenmodulboden Kühlflächen aus.

Dem Gestell 8 ist ein Paneel 13 zugeordnet, das eine Ladeanschlussbuchse 14 und eine Ladestandsanzeige 15 aufnimmt. Das Paneel 13 kann das Gestell 8 in einer Gebrauchslage rückseitig abdecken und derart schwenkbar am Gestell 8 gelagert sein, dass der Antriebsraum 4 in einer Wartungslage frei zugänglich ist.

## Patentansprüche

1. Elektrische Baumaschine (1) mit einem elektrischen Fahrantrieb und/oder elektrischen Arbeitsaggregat, mit einem elektrischen Energiespeicher (2) zum Versorgen der Baumaschine (1) mit elektrischer Energie und mit einer Ladeeinrichtung (3) zum Laden des Energiespeichers (2), wobei die Ladeeinrichtung (3) oberhalb des elektrischen Energiespeichers (2) in einem Antriebsraum (4) angeordnet ist, der mit einer Abdeckhaube (5) verschließbar ist, **dadurch gekennzeichnet, dass** im Antriebsraum (4) oberhalb des elektrischen Energiespeichers (2) eine Konsole (6) angeordnet ist, die eine Schubladenführung (7) für ein Gestell (8) der Ladeeinrichtung (3) aufweist.

2. Elektrische Baumaschine nach Anspruch 1, **dadurch gekennzeichnet, dass** das Gestell (8) Einschubführungen (9) für Ladeschnittstellenmodule (10) aufweist.

3. Elektrische Baumaschine nach Anspruch 1 oder 2, **dadurch gekennzeichnet, dass** sich die in Richtung einer Hochachse projizierten Projektionsflächen des Energiespeichers (2) und des Gestells (8) wenigstens abschnittsweise, vorzugsweise vollständig, überlappen.

4. Elektrische Baumaschine nach einem der Ansprüche 1 bis 3, **dadurch gekennzeichnet, dass** die Ladeschnittstellenmodule (10) mit dem Gestell (8) erdungsverbunden sind.

5. Elektrische Baumaschine nach einem der Ansprüche 1 bis 4, **dadurch gekennzeichnet, dass** das Gestell (8) mit der Konsole (6) und damit mit einer Karosserie der Baumaschine (1) erdungsverbunden sind.

6. Elektrische Baumaschine nach Anspruch 5, **dadurch gekennzeichnet, dass** das in die Konsole (6) eingeschobene Gestell (8) mittels wenigstens einer, eine Erdungsverbindung bildenden Verschraubung (11) mit der Konsole (6) gesichert verbunden ist.

7. Elektrische Baumaschine nach einem der Ansprüche 1 bis 6, **dadurch gekennzeichnet, dass** das Gestell (8) zumindest teilweise zum Energiespeicher (2) hin offen ist und dass in diesem offenen Bereich Kühlflächen der Ladeschnittstellenmodule (10) angeordnet sind, die an einen zwischen Energiespeicher (2) und Gestell (8) vorgesehenen Kühlluftkanal (12) anschließen.

8. Elektrische Baumaschine nach einem der Ansprüche 1 bis 7, **dadurch gekennzeichnet, dass** dem Gestell (8) ein Paneel (13) zugeordnet ist, das eine Ladeanschlussbuchse (14) und eine Ladestandsanzeige (15) aufnimmt.

9. Elektrische Baumaschine nach Anspruch 8, **dadurch gekennzeichnet, dass** das Paneel (13) das Gestell (8) in einer Gebrauchslage rückseitig abdeckt und dass das Paneel (13) derart schwenkbar am Gestell (8) gelagert ist, dass die Ladeschnittstellenmodule (10) in einer Wartungslage frei zugänglich sind.

10. Elektrische Baumaschine nach einem der Ansprüche 1 bis 9, **dadurch gekennzeichnet, dass** Gestell (8) wenigstens eine Einschubführung (9) für ein Sicherungsmodul und/oder einen Stromverteiler aufweist.

11. Elektrische Baumaschine nach einem der Ansprüche 1 bis 10, **dadurch gekennzeichnet, dass** das Ladeschnittstellenmodul (10) und gegebenenfalls ein Sicherungsmodul über elektrische Steckverbindungen verfügen, die in eingeschobenem Zustand in entsprechend gegengleiche Steckverbindungen am Gestell (8) eingesteckt sind.
